(19) Europäisches Patentamt
European Patent Office
Office européen des brevets

(11) **EP 3 254 783 A1**

(12) **EUROPEAN PATENT APPLICATION**

(43) Date of publication:
**13.12.2017 Bulletin 2017/50**

(51) Int Cl.:
**B22F 1/00** *(2006.01)*      **B22F 3/105** *(2006.01)*
**C22C 33/02** *(2006.01)*

(21) Application number: **16173426.4**

(22) Date of filing: **07.06.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **EOS GmbH Electro Optical Systems**
**82152 Krailling (DE)**

(72) Inventors:
• **Nyström, Maija**
 **20700 Turku (FI)**

• **Nyrhilä, Olli**
 **21620 Kuusisto (FI)**
• **Heikkinen, Hannu**
 **20780 Kaarina (FI)**
• **Pörhönen, Antti**
 **20540 Turku (FI)**
• **Syvänen, Tatu**
 **21540 Preitilä (FI)**

(74) Representative: **Prüfer & Partner mbB**
**Patentanwälte · Rechtsanwälte**
**Sohnckestraße 12**
**81479 München (DE)**

(54) **POWDER MIXTURE FOR USE IN THE MANUFACTURE OF A THREE-DIMENSIONAL OBJECT BY MEANS OF AN ADDITIVE MANUFACTURING METHOD**

(57)    Powder mixture for use in the manufacture of a three-dimensional object by means of an additive manufacturing method, wherein the powder mixture comprises a first material and a second material, wherein the first material comprises a steel in powder form, wherein the second material comprises a reinforcement material different from the first material, and wherein the powder mixture is adapted to form a composite object when solidified by means of an electromagnetic and/or particle radiation in the additive manufacturing method.

Fig. 1

**Description**

The present invention relates to a powder mixture for use in the manufacture of a three-dimensional object by means of an additive manufacturing method, a method for the production of the powder-mixture, methods for the manufacture of a three-dimensional object from the powder mixture by selective layer-wise solidification of the powder mixture, a three-dimensional object manufactured from the powder mixture by selective layer-wise solidification, and a control unit for an apparatus for manufacturing a three-dimensional object layer by layer by applying and selectively solidifying the powder mixture.

Examples for additive manufacturing methods, which include also rapid prototyping methods and rapid tooling methods, are known under the names "selective laser sintering" and "selective laser melting". In these methods, a thin layer of building material in powder form is applied repeatedly, and the building material in each layer is selectively solidified at positions corresponding to a cross-section of a three-dimensional object by selective irradiation using a laser beam, i.e. the building material is molten or partially molten at these positions and then solidifies.

A method for producing a three-dimensional object by selective laser sintering or selective laser melting as well as an apparatus for carrying out this method are described, for example, in EP 1 762 122 A1.

In the article by Dongdong Gu et al. in Applied Surface Science Vol. 225, pages 1880-1887 (published in 2008) the use of stainless steel for laser sintering is disclosed. The properties, especially the mechanical properties, of three-dimensional objects produced from stainless steel, however, are often unsatisfactory.

In order to improve the properties of three-dimensional objects, it is known in the art to produce three-dimensional objects from steel and reinforcement particles, for example silicon carbide particles, by means of conventional sintering methods and casting methods. The reinforcement effect, however, is limited, for example, due to the dissolution of the reinforcement particles in the molten steel during the processing time.

An object of the present invention is to provide a powder mixture, the use of which makes improved additive manufacturing methods available, a method for the production of such a powder mixture, improved methods for the manufacture of a three-dimensional object making use of the powder mixture, an improved three-dimensional object manufactured from the powder mixture, for example a three-dimensional object with improved mechanical properties, and a control unit for an apparatus for manufacturing a three-dimensional object making use of the powder mixture.

The object is achieved by the powder mixture according to claim 1, the method for the production of a powder mixture according to claim 9, the methods for the manufacture of a three-dimensional object according to claims 10 and 15, the three-dimensional object according to claim 11, and the control unit according to claim 14. Refinements of the invention are specified in the dependent claims. Any feature set forth in the dependent claims as well as any feature set forth in the description of an exemplary embodiment of the invention below can be understood as a feature suitable for refining the powder mixture, the method for the production of a powder mixture, the methods for the manufacture of a three-dimensional object, the three-dimensional object, and the control unit.

A powder mixture is understood as a granular mixture of two or more components. The powder mixture according to the invention comprises a first and a second material. The second material comprises a reinforcement material. The powder mixture is for use in an additive manufacturing method. The so manufactured three-dimensional objects comprise composite materials. A composite material is a material with a matrix material in which a reinforcement material is embedded. Composite materials often have improved (mechanical) properties compared to the matrix material and/or the reinforcement material.

The powder mixture according to the invention is a powder mixture for use in the manufacture of a three-dimensional object by means of an additive manufacturing method, wherein the powder mixture comprises a first material and a second material, wherein the first material comprises a steel in powder form, wherein the second material comprises a reinforcement material different from the first material, and wherein the powder mixture is adapted to form a composite object when solidified by means of an electromagnetic and/or a particle radiation in the additive manufacturing method. The first and/or the second material may comprise further materials. Using this powder mixture, for example improved additive manufacturing methods, especially additive manufacturing methods leading to three-dimensional objects comprising a composite material with improved properties compared to the pure matrix material, are provided.

The steel preferably contains Fe and max 0.10 wt% C, 2.00 - 3.00 wt% Mo, 10.00 - 15.00 wt% Ni, and 16.00 - 19.00 wt% Cr; more preferably, it further contains max 0.030 wt% S, max 0.045 wt% P, max 0.16 wt% N, max 0.50 wt% Cu, max 1.00 wt% Si, and max 2.00 wt% Mn.

Preferably, the median grain size of the first material is 1 $\mu$m or more, more preferably 10 $\mu$m or more, and/or 150 $\mu$m or less, more preferably 75 $\mu$m or less.

Preferably, the particles of the first material are substantially spherical.

Preferably, the reinforcement material comprises at least one non-metallic material, wherein preferably the non-metallic material is one out of borides and carbides and nitrides and oxides and silicides and graphite, wherein more preferably the reinforcement material comprises silicon carbide, wherein most preferably the reinforcement material is silicon carbide.

Preferably, the reinforcement material is a powder, wherein the median grain size of the reinforcement material is 1 $\mu$m or more, preferably 10 $\mu$m or more.

Preferably, the median grain size of the reinforcement material is 200 $\mu$m or less, preferably 75 $\mu$m or less.

Preferably, the particles of the reinforcement material have a substantially spherical or a substantially angular or a substantially irregular shape.

Preferably, the content of the reinforcement material in the powder mixture is 0.05 wt% or more, preferably 0.1 wt% or more, more preferably 0.3 wt% or more, still more preferably 0.5 wt% or more.

Preferably, the content of the reinforcement material in the powder mixture is 40 wt% or less, preferably 10 wt% or less, more preferably 5 wt% or less, still more preferably 2 wt% or less.

The method for the production of a powder mixture according to the invention is a method for the production of a powder mixture for use in the manufacture of a three-dimensional object by means of an additive manufacturing method, wherein the powder mixture comprises a first material and a second material, wherein the first material comprises a steel in powder form, wherein the second material comprises a reinforcement material different from the first material, and wherein the powder mixture is adapted to form a composite object when solidified by means of an electromagnetic and/or a particle radiation in the additive manufacturing method, wherein the powder mixture is produced by mixing the first material and the second material in a predetermined mixing ratio. Using this method, a powder mixture according to the invention can be produced.

Preferably, the mixing is a dry mixing.

A method for the manufacture of a three-dimensional object according to the invention is a method for the manufacture of a three-dimensional object from a powder mixture by selective layer-wise solidification of the powder mixture by means of an electromagnetic radiation and/or a particle radiation at positions that correspond to a cross-section of the object in a respective layer, wherein the powder mixture is a powder mixture for use in the manufacture of a three-dimensional object by means of an additive manufacturing method, wherein the powder mixture comprises a first material and a second material, wherein the first material comprises a steel in powder form, wherein the second material comprises a reinforcement material different from the first material, and wherein the powder mixture is adapted to form a composite object when solidified by means of an electromagnetic and/or a particle radiation in the additive manufacturing method. Using this method, for example a three-dimensional object with improved material properties can be manufactured.

The three-dimensional object according to the invention is a three dimensional object manufactured from a powder mixture by selective layer-wise solidification of the powder mixture by means of an electromagnetic and/or particle radiation at positions that correspond to a cross-section of the object in a respective layer, wherein the powder mixture is a powder mixture for use in the manufacture of a three-dimensional object by means of an additive manufacturing method, wherein the powder mixture comprises a first material and a second material, wherein the first material comprises a steel in powder form, wherein the second material comprises a reinforcement material different from the first material, and wherein the powder mixture is adapted to form a composite object when solidified by means of electromagnetic and/or particle radiation in the additive manufacturing method. The three-dimensional object has, for example, improved mechanical properties and/or improved corrosion properties and/or an improved balance between these properties compared to a three-dimensional object manufactured from the first material.

Preferably, the material of the three-dimensional object has a tensile strength of 500 MPa or more, more preferably 800 MPa or more, most preferably 900 MPa or more.

Preferably, the material of the three-dimensional object has a yield strength of 170 MPa or more, preferably 400 MPa or more, most preferably 600 MPa or more.

Preferably, a reduction of a pin mass loss in wear testing of the three-dimensional object compared to a pin mass loss in wear testing of a three-dimensional object manufactured from the first material by selective layer-wise solidification of the first material by means of the electromagnetic and/or particle radiation at positions that correspond to a cross-section of the object in a respective layer is 25% or more, preferably 50% or more, more preferably 75% or more.

Preferably, an increase of a disk mass loss in wear testing of the three-dimensional object compared to a disk mass loss in wear testing of a three-dimensional object manufactured from the first material by selective layer-wise solidification of the first material by means of the electromagnetic and/or particle radiation at positions that correspond to a cross-section of the object in a respective layer is 15% or more, preferably 50% or more, more preferably 70% or more.

The control unit according to the invention is a control unit for an apparatus for manufacturing a three-dimensional object layer by layer by applying and selectively solidifying a powder mixture, wherein the powder mixture is a powder mixture for use in the manufacture of a three-dimensional object by means of an additive manufacturing method, wherein the powder mixture comprises a first material and a second material, wherein the first material comprises a steel in powder form, wherein the second material comprises a reinforcement material different from the first material, wherein the powder mixture is adapted to form a composite object when solidified by means of an electromagnetic and/or a particle radiation in the additive manufacturing method, and wherein the control unit is adapted to control that a predefined amount of energy is introduced into a defined volume of the powder mixture by means of the electromagnetic and/or particle radiation. This, for example, provides a control unit for an apparatus for manufacturing a three-dimensional object with improved material properties.

Preferably, an upper limit of the predefined amount of energy is selected such that the reinforcement material is not completely dissolved during the time in which the predefined amount of energy is applied to the defined volume of the powder mixture.

Preferably, the upper limit of the predefined amount of energy is defined such that the reinforcement material of the powder mixture is dissolved to 70 wt% or less, preferably 50 wt% or less, more preferably 30 wt% or less during the time in which the predefined amount of energy is applied to the defined volume of the powder mixture.

A method for the manufacture of a three-dimensional object according to the invention is a method for the manufacture of a three-dimensional object from a powder mixture by selective layer-wise solidification of the powder mixture by means of an electromagnetic and/or a particle radiation at positions that correspond to a cross-section of the object in a respective layer, wherein the powder mixture comprises a first material and a second material, wherein the first material comprises a metal in powder form, wherein the second material comprises a reinforcement material, wherein the powder mixture is selectively solidified by means of an electromagnetic and/or a particle radiation at positions that correspond to a cross-section of the object in a respective layer forming a composite material, and wherein 90 wt% or less, preferably 70% or less, more preferably 50% or less, still more preferably 30% or less of the reinforcement material are dissolved in the metal. Using this method, for example a three-dimensional object with improved material properties can be manufactured.

Other features and expediencies of the invention may be found in the description of an exemplary embodiment with the aid of the appended drawings.

Fig. 1    is a schematic view, partially represented in section, of an apparatus for the layer-wise manufacture of a three-dimensional object according to an embodiment of the present invention.

Fig. 2    shows FE-SEM images of the first and the second material used to produce a powder mixture according to the invention.

Fig. 3    shows FE-SEM images of two powder mixtures according to the invention.

Fig. 4    shows the measured density and the calculated theoretical density for three examples according to the invention.

Fig. 5    shows the measured tensile and yield strength and their standard deviations for three examples according to the invention.

Fig. 6    shows the measured hardness together with its standard deviation for three examples according to the invention.

Fig. 7    shows the pin mass loss and the disk mass loss measured by wear testing for three examples according to the invention.

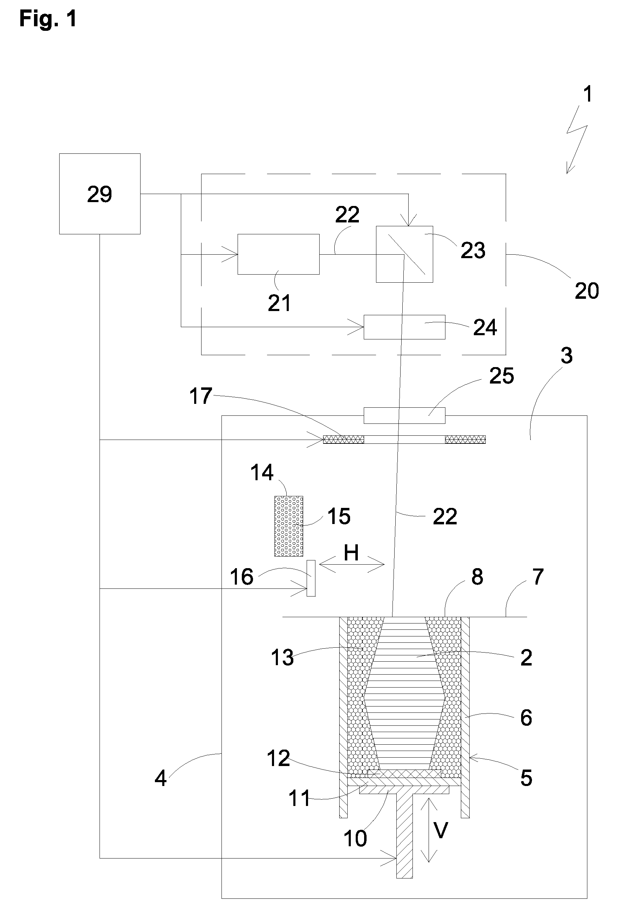

The apparatus represented in Fig. 1 is a laser sintering or laser melting apparatus 1 for the manufacture of a three-dimensional object 2.

The apparatus 1 contains a process chamber 3 having a chamber wall 4. A container 5 being open at the top and having a container wall 6 is arranged in the process chamber 3. The opening at the top of the container 5 defines a working plane 7. The portion of the working plane 7 lying within the opening of the container 5, which can be used for building up the object 2, is referred to as building area 8. Arranged in the container 5, there is a support 10, which can be moved in a vertical direction V, and on which a base plate 11 which closes the container 5 toward the bottom and therefore forms the base of the container 5 is attached. The base plate 11 may be a plate which is formed separately from the support 10 and is fastened on the support 10, or may be formed so as to be integral with the support 10. A building platform 12 on which the object 2 is built may also be attached to the base plate 11. However, the object 2 may also be built on the base plate 11, which then itself serves as the building platform.

In Fig. 1, the object 2 to be manufactured is shown in an intermediate state. It consists of a plurality of solidified layers and is surrounded by building material 13 which remains unsolidified.

The apparatus 1 furthermore contains a storage container 14 for building material 15 in powder form, which can be solidified by electromagnetic radiation, for example a laser, and/or particle radiation, for example an electron beam. The apparatus 1 also comprises a recoater 16, which is movable in a horizontal direction H, for applying layers of building material 15 within the building area 8. Optionally, a radiation heater 17 for heating the applied building material 15, e.g. an infrared heater, may be arranged in the process chamber.

The apparatus 1 furthermore contains an irradiation device 20 having a laser 21, which generates a laser beam 22 that is deflected by means of a deflecting device 23 and focused onto the working plane 7 by means of a focusing device 24 via an entrance window 25, which is arranged at the top side of the process chamber 3 in the chamber wall 4.

The apparatus 1 furthermore contains a control unit 29, by means of which the individual component parts of the apparatus 1 are controlled in a coordinated manner for carrying out a method for the manufacture of a three-dimensional object. The control unit 29 may contain a CPU, the operation of which is controlled by a computer program (software).

During operation of the apparatus 1, the following steps are carried out: For each layer, the support 10 is lowered by a height which preferably corresponds to the desired thickness of the layer of the building material 15. The recoater 16 is moved to the storage container 14, from which it receives an amount of building material 15 that is sufficient for the application of at least one layer. The recoater 16 is then moved over the building area 8 and applies a thin layer of the building material 15 in powder form onto the base plate 11 or the building platform 12 or a previously applied layer. The layer is applied at least across the cross section of the object 2, preferably across the entire building area 8. Optionally, the building material 15 is heated to an operation temperature by means of at least one radiation heater 17. The cross section of the object 2 to be manufactured is then scanned by the laser beam 22 in order to solidify this area of the applied layer. These steps are carried out until the object 2 is completed. The object 2 can then be removed from the container 5.

According to the invention, a powder mixture is used as building material 15. The powder mixture comprises a first material and a second material. According to the embodiment, the first material comprises a steel in powder form. The second material comprises a reinforcement material.

According to the embodiment, the powder mixture is processed by the direct metal laser sintering (DMLS) method.

In the selective laser sintering or selective laser melting method small portions of a whole volume of powder required for manufacturing an object are heated up simultaneously to a temperature which allows a sintering and/or melting of these portions. This way of manufacturing an object can typically be characterized as a continuous and/or - on a micro-level - frequently gradual process, whereby the object is acquired through a multitude of heating cycles of small powder volumes. Solidification of these small powder portions is carried through selectively, i. e. at selected positions of a powder reservoir, which positions correspond to portions of an object to be manufactured. As in selective laser sintering or selective laser melting the process of solidification is usually carried through layer by layer the solidified powder in each layer is identical with a cross-section of the object that is to be built. Due to the small volume or mass of powder which is solidified in a given time span, e. g. 1 mm$^3$ per second or less, and due to conditions in a process chamber of such additive manufacturing machines, which can favour a rapid cool-down below a critical temperature, the material normally solidifies quickly after heating.

In conventional sintering and casting methods one and the same portion of building material is heated up to a required temperature at the same time. A whole portion of material required to generate an object is cast into a mould in a liquid form. This volume of building material is therefore held above a temperature level required for melting or sintering for a much longer time compared to the selective laser sintering or selective laser melting method. Large volumes of hot material lead to a low cooling rate and a slow solidification process of the building material after heating.

In other words, selective laser sintering or selective laser melting methods can be differentiated from conventional sintering and casting methods by processing of smaller volumes of building material, faster heat cycles and less need for heating up build material with high tolerances for avoiding a premature solidification of the material. These can be counted among the reasons why the amount of energy introduced into the building material for reaching the required temperatures can be controlled more accurately in selective laser sintering or selective laser melting methods. These conditions allow for setting an upper limit of energy input into the powder portions to be processed, which determines a temperature generated in the powder portions, more precisely, that is lower and closer to the melting point of the respective material than in conventional sintering or casting methods. This advantage makes it possible to minimize common problems of conventional sintering and casting methods. One such phenomenon is dissolution of reinforcement material in a steel melt during manufacturing, especially if a resulting composite material is thermodynamically unstable. The selective laser sintering or selective laser melting method allows for reducing dissolution by lowering the heating temperatures, for example generated by a laser and/or electron beam, in defined areas of the powder bed and for raising a cooling rate after heating. Thus, the reinforcing quality of the reinforcement material, i.e. its ability to change (mechanical) properties of an object in a favourable manner, can become much more apparent. The phrase "mechanical properties of an object" is understood in this context as properties which derive from material properties of the object and not from a specific shape and/or geometry of the object. Mechanical properties of the object can be tensile strength or yield strength, for example. An object generated from a powder mixture according to the invention may show a change of various mechanical properties. The inventive method of manufacturing a three-dimensional object provides considerable advantages by improving selected mechanical properties compared to an object manufactured without reinforcement material.

A comparatively short exposure of the building material or the formed composite material to high temperatures leads to a minimization of the dissolution of the reinforcement material in the first material. Furthermore chemical reactions of the reinforcement material with the first material are minimized. This is important as the reaction products are generally brittle. If the layer of the reaction product is thick, a considerable weakening of the material can occur. In the case of stainless steel, the reactions can also lead to a depletion of free chromium in the structure surrounding the reinforcement particles and a loss of corrosion resistance in these areas.

In a specific embodiment of the invention, the first material is a 316L grade steel according to the SAE steel grade system (hereinafter referred to as "316L"). This steel contains Fe and up to 0.03 weight percent (wt%) carbon, up to 0.10 wt% nitrogen, up to 0.50 wt% copper, up to 0.75 wt% silicon, up to 2.00 wt% manganese, between 2.25 and 3.00 wt% molybdenum, between 13.00 and 15.00 wt% nickel, and between 17.00 and 19.00 wt% chromium.

The steel is used as a powder with substantially spherically shaped powder particles, which means that at least most of the powder particles have a high sphericity. The steel particles can have a regularly rounded shape and/or a smooth surface but they can also have areas with a rough surface and other deviations. The powder has a median grain size (d50-value) between 33 and 40 $\mu$m. The material is obtainable from EOS GmbH Electro Optical Systems under the tradename "EOS StainlessSteel 316L".

The term "median grain size", also denoted as "d50-value", is understood as the particle diameter corresponding to the median of a particle volume distribution. The median grain size can be determined by means of laser scattering.

The second material is silicon carbide (SiC) powder. The median grain size (d50-value) of the silicon carbide powder particles lies between 25 and 35 $\mu$m. The silicon carbide powder particles have a substantially angular shape, i.e. at least most of the powder particles have edges and vertices. Preferably, they do not have cavities but they can have concave portions. Preferably, they are not elongated particles. The material is obtainable from the Compagnie de Saint-Gobain under the tradename "SIKA ABR I F320". The particle size distribution of this material is measured according to FEPA Standard 42-1:2006 for Macro-, and 42-2:2006 for Micro-Grains.

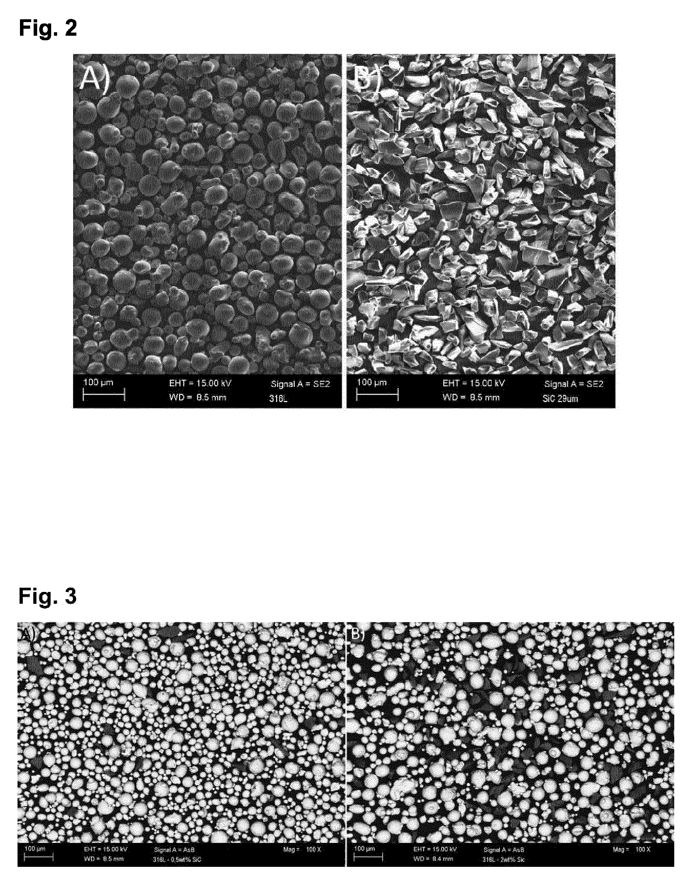

In Fig. 2 FE-SEM images of the 316L powder (left image) and the silicon carbide powder (right image) are shown. The images show that the particles of the 316L powder have a substantially spherical shape and that the particles of the silicon carbide powder have an angular shape.

FE-SEM imaging has been done using Zeiss ULTRAplus FE-SEM - system equipped with two separate secondary electron (SE) detectors and a back scattered electron (BSE) detector. A small amount of each sample powder has been spread evenly on a piece of electrically conductive carbon tape and mounted to a sample holder. Images have been captured with 100X magnification using the BSE imaging mode and 15.00 kV acceleration voltage of the electron beam.

Alternatively, a steel of a different type can be used as first material, for example a maraging steel, for example X3NiCoMoTi18-9-5 (classification according to DIN EN 10027-1), obtainable from EOS GmbH Electro Optical Systems under the tradename "EOS MaragingSteel MS1".

Alternatively, the second material can comprise a reinforcement material with substantially spherical particles. It can also comprise a reinforcement material with irregularly shaped particles, e.g. with elongated particles having an aspect ratio up to 200:1.

Alternatively, the reinforcement material can be a material different from silicon carbide.

It is generally preferred that the reinforcement material has a higher melting point than the steel of the first material. If the powder mixture according to the invention is heated to a temperature where the steel powder melts, the reinforcement material can remain solid, for example in crystalline form, if the temperature is held below the melting point of the reinforcement material. A composite object manufactured by this method can thus gain particularly favourable properties, for example mechanical properties.

Tungsten carbide, other carbides, borides, nitrides, oxides, silicides, and other non-metallic materials with high melting points, especially ceramics, can be selected as reinforcement materials.

According to the embodiment, the powder mixture is produced by mixing the 316L powder and the silicon carbide powder using a dry mixing process with a uniaxial rotating mixer. The powder components are weighed and sealed in a cylindrical glass jar. The jar is rotated with a rotational speed of 15 rpm for 20 minutes. The selected rotational speed allows the powder to flow to the opposite end of the partially filled jar during each revolution in order to ensure that the silicon carbide becomes dispersed in the steel powder. The selected mixing time ensures that the silicon carbide becomes dispersed in the steel powder and that the accumulation of electrostatic forces within the mixture is minimized. Using this mixing method a homogenous powder mixture is obtained. This means that the silicon carbide particles may be distributed evenly in the 316L particles so that substantially the same mixing ratio (number of particles and/or weight percent) can be measured in any portion of powder mixture of a certain volume and/or weight.

The powder mixture of the embodiment is used as building material 15 for manufacturing three-dimensional objects by selective laser sintering or selective laser melting using the EOS M100 DMLS-system having a Yb fibre laser as laser sintering or laser melting apparatus 1.

The manufactured three-dimensional objects consist of a composite material made up of a matrix being at least predominantly a steel matrix with SiC reinforcement particles.

The process parameters of the selective laser sintering or selective laser melting process are preferably selected such that the amount of energy that is introduced into a defined volume of the powder mixture by an electromagnetic radiation (for example a laser) and/or a particle radiation (for example an electron beam) is equal to or below a predefined upper limit. The upper limit is predefined such that it is ensured that the reinforcement material is not completely dissolved in the melt of the first material during the time in which the electromagnetic radiation and/or particle radiation heats the defined volume. The power of a laser or electron beam, for example, as a main determining factor of the heat generated in a powder portion can be controlled by means of a control unit as part of the additive manufacturing machine. The control unit can be connected to a database, wherein correlations between process parameters are stored, and concrete values, for example a power input for the laser or electron beam, are generated based on predefined parameters or thresholds. These values can be fed into the control unit which generates control signals for adjusting a power of a laser or electron beam as part of the additive manufacturing machine correspondingly. The control unit can also work based on sensor data of an active process monitoring system which detects if a heating and/or solidifying process runs within specified operational parameters. Reinforcement material is said to be dissolved if it is spread in a first material, regardless of whether a chemical reaction of the reinforcement material and the first material takes place. The dissolution can be conceived as a disintegration of bigger particles to a larger number of smaller particles and a potential distribution of these smaller particles in the melt of the first material. The amount of the reinforcement material that is dissolved is preferably 70 wt% or less, more preferably 50 wt% or less, still more preferably 30 wt% or less. The control unit 29 of the laser sintering or melting apparatus 1 can be adapted to control the apparatus 1 such that the amount of energy that is introduced into a defined volume of the powder mixture by means of electromagnetic radiation and/or particle radiation is equal to or below the upper limit.

The process parameters of the selective laser sintering or selective laser melting process are preferably selected such that the amount of energy that is introduced into a defined volume of the powder mixture by means of electromagnetic radiation and/or particle radiation is equal to or above a predefined lower limit. The lower limit is predefined such that it is ensured that the first material is completely molten during the time in which the electromagnetic radiation and/or the particle radiation introduces energy into the defined volume of the powder mixture, whereby the energy input can be controlled by a control unit which can work depending on data provided by a database and/or by an active process monitoring system. The control unit 29 of the laser sintering or melting apparatus 1 can be adapted to control the apparatus 1 such that the amount of energy that is introduced into a defined volume of the powder mixture by means of the electromagnetic radiation and/or the particle radiation is equal to or above the lower limit.

Partial dissolution of the reinforcement material in the melt of the first material or reaction of the reinforcement material with the first material can actually be beneficial as it can improve the bonding between the reinforcement material and the steel, which in turn improves the load transfer from the first material to the reinforcement material. Without load transfer, the reinforcement material could not contribute to the strength properties of the material. Excessive dissolution of the reinforcement material in the melt of the first material/reaction of the reinforcement material with the first material is typically the problem with conventional sintering and casting methods. Therefore, it can be necessary to find a compromise between bond strength and dissolution of the reinforcement material in the melt of the first material/reaction of the reinforcement material with the first material. In this instance, the lower limit for the amount of energy that is introduced into a defined volume of the powder mixture can be selected such that it is ensured that the reinforcement material is partially dissolved in the melt of the first material during the time in which the electromagnetic radiation and/or the particle radiation introduces energy into the defined volume, wherein the amount of the reinforcement material that is dissolved is preferably 1 wt% or more, more preferably 5 wt% or more, still more preferably 10 wt% or more.

The process parameters which can be changed in order to control the amount of energy that is introduced into a defined volume of the powder mixture are, for example, laser spot size, laser beam profile, laser output power (radiant energy that can, for example, be transmitted through an optical system before it is actually used in the process), thickness of a powder layer, distance between individual scanning lines of, for example, a laser or electron beam, and scanning speed of, for example, a laser or electron beam over the predefined areas to be solidified. One has to take account of the possible interdependence of some of these parameters. For example, for a given laser beam profile, for instance a Gaussian beam profile, and a given beam diameter, the hatch distance can lie between an upper limit and a lower limit in order to ensure that the energy input into the building material is sufficient at all positions to be solidified without overheating the building material and without leaving a sintering or melting process incomplete.

Also increased porosity caused by the reinforcement material may be a reason for unsuccessful strengthening using conventional sintering and casting methods. This problem can be avoided using selective laser sintering or selective laser melting methods.

The process parameters of the selective laser sintering or selective laser melting process are preferably selected such that the heat input factor Q and the spot size of the laser lie within certain preselected ranges in order to ensure that the first material is sufficiently molten and to avoid a complete dissolution of the reinforcement material in the first material. The heat input factor should lie within these ranges independently of other parameters, for example a spot size of the laser on the powder bed, which may vary according to different angles under which a laser beam reaches different positions in the building area 8 in which single powder portions are to be solidified. The heat input factor is an approximate measure for the amount of energy that is introduced into a defined volume of the powder mixture by means of the laser beam. More specifically, the heat input factor is a measure for the amount of energy introduced per volume of the powder mixture. It is, for example, measured in units of J/mm$^3$. The heat input factor Q is calculated based on the laser output power P, the hatch distance d, the hatch speed v, and the layer thickness s according to the formula

$$Q = P / (d * v * s)$$

It has been found out that a heat input factor lying between 30 and 150 J/mm$^3$ and a spot size of the laser lying between 35 and 120 $\mu$m lead to three-dimensional objects having favourable properties, for example favourable mechanical properties.

The following values have been found out to be very favourable process parameters: P = 105 W, d = 0.07 mm, v = 830 mm/s, s = 0.02 mm. These values correspond to Q = 90.4 J/mm$^3$. These parameters have been used for the manufacture of three-dimensional objects using the mixtures A, B, and C to be described below.

The three-dimensional objects manufactured by means of the method according to the embodiment of the invention described above are characterized with respect to various properties. The methods used for the characterization are described below.

1. Densities are determined utilizing the Archimedes' principle according to standard ISO 3369: "Impermeable sintered metal materials and hard metals - Determination of density" for three-dimensional objects manufactured as density cube samples by selective laser sintering or selective laser melting are used for tensile testing. In this density testing method, the mass of a sample is determined both in air and as immersed in water, and the measured mass difference between the two measurements is then used for the estimation of the sample volume based on the known density of water. From the measured weight and volume of the sample, its density can then be calculated. For the tests, all sides of the density cube samples are ground manually with Struers SiC #320 abrasive paper using Struers Labo-Pol-5 sample preparation system in order to reduce the surface roughness and thereby the possibility of test result deterioration due to trapped air bubbles on the sample surfaces. Ion-exchanged water is used for the weighing in water immersion, and a small amount of dish washing liquid is added to the water in order to lower its surface tension. The procedure is performed with a laboratory scale (Kern PLT 650-3M) using an inbuilt density calculation program. For the automated calculation, the water temperature is measured before the tests. The measurements are repeated three times for each sample switching the sample between each measurement, and before each new measurement the samples are dried thoroughly. The results presented below are the averaged values of the three repetitions.

Due to the significantly lower density of silicon carbide in comparison to the selected first material, some extent of density decrease can be expected to be related to the increasing silicon carbide content of the samples. In order to evaluate the effect of silicon carbide addition on the structural integrity of the materials, this direct density reduction effect is calculated and the theoretical composite material densities are compared to the measured density values. The calculations are based on the theoretical density of solid silicon carbide (3.21 g/cm$^3$) and the measured density of a sample manufactured from 316L without reinforcement material (7.99 g/cm$^3$). These densities are used for estimating the volume fraction of silicon carbide in the materials. Then, based on these theoretical volume fractions and the stated densities of the solid material constituents, the theoretical densities of the composite materials are calculated. The described procedure can be expressed by the equations

```
SiC volume fraction = SiC wt% / SiC density / (SiC wt% / SiC
density + 316L wt% / 316L density)
```

```
316L volume fraction = 316L wt% / 316 L density / (SiC wt% / SiC
density + 316L wt% / 316L density)
```

$$composite\ density = SiC\ volume\ fraction * SiC\ density + 316L$$

$$volume\ fraction * 316L\ density$$

It is clear from the equations, that these theoretical composite densities are based on the assumption that the silicon carbide particles do not add any empty volume to the composite material structure, and that the same level of defects that was present in the original 316L sample would be present also in the composite materials.

2. Tensile testing is carried out according to standard ISO 6892-1:2009:B10 "Metallic materials - Tensile testing - Part 1: Method of test at room temperature". Three-dimensional objects manufactured as tensile test pieces (samples) by selective laser sintering or selective laser melting are used for tensile testing. The cross-section diameter of each sample is reduced with a turning lathe so that it reaches its smallest value, approximately 4.0 mm, in the middle of the samples. This diameter is verified with a micrometre. The ends of the samples are threaded for fastening. The testing is done with Zwick/Roell Z400-test machine (Zwick Roell Group). The tensile force is increased by 10 MPa/s during the elastic phase of the material behaviour, and the increase is reduced to 0.375 MPa/s at the beginning of the plastic deformation phase. During the tests, the maximum load, offset yield strength ($R_{p0.2}$-limit), tensile strength, and elongation of the samples at fracture are recorded, and the reduction of the cross-section area at the point of fracture is then measured with a slide.

3. Hardness testing of the three-dimensional objects manufactured as samples by selective laser sintering or selective laser melting is carried out using the Rockwell method. The tests are performed according to the standard EN-ISO 6508-1:2005 "Metallic materials - Rockwell hardness test - Part 1: Test method". Density cube samples are used for the testing. The tests are performed five times for each sample, and the measured values are reported with an accuracy of 0.1 HRB. In the Rockwell test method, an indenter of a specified shape, dimensions and material is pressed against the sample surface with a defined force through a two-step procedure. The force is applied by adding a specified load on the indenter. First, the indenter is pressed with a small preliminary force and the resulting initial indentation depth is measured, after which a greater additional force is applied and then removed. After returning to the preliminary force level, the final indentation depth is measured and the hardness of the sample is calculated based on the difference in the depths of the initial and final indentations through the equation

$$Hardness = N - h/s,$$

where h is the measured difference in the indentation depths and N and s are scale-specific constants specified in the standard. The standard also specifies the type of the indenter, and its shape and material are varied depending on the hardness of the test material. The test procedure deviates from the standard in that a tungsten carbide (WC) ball indenter is used also when hardness values of over 100 HRB are measured, instead of a diamond cone as specified in the standard. This deviation could lead to an increased measurement error due to shape deformation of the indenter and small depth of the indentation. However, as the 100 HRB hardness limit is not significantly exceeded in the present case, these factors are not assumed to influence the test results to a high extent. The tungsten carbide ball indenter used in the tests has a diameter of 1.5875 mm (1/16 inch), and the applied preliminary and total forces were 98.07 N and 980.70 N, respectively, corresponding to applied loads of 10.0 kg and 100.0 kg.

4. Resistance to abrasive wear is tested by the ball-on-disk - method according to the standard ASTM G99 - 95a "Standard Test Method for Wear Testing with a Pin-on-Disk Apparatus". In this method, a pin specimen with a spherical head is pressed perpendicularly against a horizontally rotating disk of a pre-defined material and surface finish. The pin sliding speed and sliding distance, as well as the normal force between the contacting surfaces are also to be defined in the testing setup. The tests are performed at room temperature. After the tests, the material analysis is performed based on the mass or volume loss of the pin and disk specimens, contact surface characterization and the frictional force data recorded during the tests using CETR UMT-2 tribometer.

The tests are performed using disk specimens made of maraging steel powder EOS MaragingSteel MS1 manufactured by selective laser sintering or selective laser melting using the EOS M290 DMLS-system having a Yb fibre laser and default process parameters provided by the manufacturer of the EOS M290 DMLS-system. The test surfaces of the disk specimens are ground manually with Struers SiC #80 and #320 abrasive papers in the respective order by Struers LaboPol-5 sample preparation system. The surface roughness values of the samples are measured with a surface roughness tester (Mitutoyo Surftest SJ-210), and the measurements are repeated four times from different positions of each disk. The measured roughness values are typically in the order of 1 μm in the present case.

5. Corrosion resistance of three-dimensional objects manufactured as samples by selective laser sintering or selective laser melting is tested according to the standard NACE TM0169/G31 - 12a "Standard Guide for Laboratory Immersion Corrosion Testing of Metals". The test period is set to 30 days, after which the test results are evaluated by visual inspection and sample mass change measurement. All sample surfaces are first ground manually with Struers SiC #80 and #320 abrasive papers using Struers LaboPol-5 sample preparation system. The samples are then let to oxidize in the room atmosphere for 24 hours in order to simulate the probable real-life operating conditions of the test materials. The samples are then cleaned first by scouring them with paper and ethanol and then by rinsing in an ultrasonic bath (Retsch UR1, Retsch GmbH) for 5 minutes, using ion-exchanged water. The sample dimensions are then measured with a slide caliper (ABSOLUTE AOS Digimatic Caliper 500-123U, Mitutoyo UK Ltd) in order to determine their surface areas, and they are weighed with a laboratory scale (Kern PLT 650-3M). The tests are performed in a standard sea water environment, in which the electrolyte is a mixture of ion-exchanged water and 3.56 wt% reagent-grade sodium chloride (NaCl, Baker Analyzed, J.T. Baker). The solution is prepared by measuring 900g of the water and 33.22g NaCl separately with a laboratory scale (Kern PLT 650-3M) and combining them in plastic test containers. The dissolution of NaCl is agitated by rotating the containers manually for 30 seconds. The containers are made of high-density polyethylene (PE-HD) and have a volume of 1000 ml. The samples are attached to the lid of the containers with polymer strings so that they are positioned roughly in the middle of the containers in vertical direction. The samples are not allowed to come in contact with the container walls during the tests. The tests are carried out at room temperature (20-25°C) and ambient pressure. After 30 days the samples are rinsed and cleaned following a two-step procedure. In the first step, they are rinsed in ion-exchanged water and blow dried, and in the second step they are brushed under ion-exchanged water with an electric tooth brush and then rinsed in an ultrasonic bath for three minutes. The samples are weighed three times after each cleaning step with a laboratory scale (Kern PLT 650-3M).

Assuming that the corrosion on the sample surfaces advances with a uniform rate on the whole surface area, the rate of uniform corrosion penetration can be estimated based on the measured weight losses and the known sample surface areas. The calculations are performed by the equation

$$\texttt{Rate of uniform corrosion penetration = (K * W) / (A * T * D),}$$

in which K is a measurement unit-specific constant with a value of $8.76 * 10^4$ for the calculation of the rate of uniform corrosion penetration as millimeters per year (mm/yr), W is the sample mass loss in grams, A is the sample surface area in $cm^2$, T is the time of exposure in hours and D is the sample material density.

Three-dimensional objects are manufactured as pin specimens by selective laser sintering or selective laser melting. No additional surface treatment is done. The following parameters have been chosen for the tests: Normal force = 40.0 N, sliding speed = 0.25 m/s, sliding distance = 450.0 m, test time = 30.0 min. Due to the slight unevenness of the disk sample surfaces, the normal force value may thereby fluctuate by approximately 5.0 N from the pre-set value during each disk revolution. This extent of normal force fluctuation is typical for the described test setup and cannot be significantly reduced. Also the temperature of the test specimen holder is monitored, and slight increase of the temperature may be recorded during the course of the tests. This increase can be considered to be too insignificant to have any considerable effect on the test results. Before each test, the pin and disk specimens are cleaned by rinsing them in ethanol, scouring with paper and blowing with pressurized air, and after this they are weighed with a laboratory scale (Precisa Gravimetrics XT 1220M, Precisa Gravimetrics AG). After the tests, the samples are carefully detached from the test machine, and the contact surfaces are observed visually and documented. The wear debris is then carefully removed from the samples by the same procedure as described above. The samples are then weighed again and the mass changes are calculated from the results.

Three specific examples of the powder mixture according to the embodiment of the invention described above are referred to as "mixture A", "mixture B" and "mixture C".

Mixture A contains 0.5 wt% of silicon carbide, mixture B contains 1.0 wt% of silicon carbide, and mixture C contains 2.0 wt% of silicon carbide.

In Fig. 3 FE-SEM images of mixture A (left image) and mixture C (right image) are shown. The steel particles are represented in light colour and the silicon carbide particles appear in dark colour. The images show that the silicon carbide particles are dispersed in the steel powder.

FE-SEM imaging has been done using Zeiss ULTRAplus FE-SEM - system equipped with two separate secondary electron (SE) detectors and a back scattered electron (BSE) detector. A small amount of each sample powder has been spread evenly on a piece of electrically conductive carbon tape and mounted to a sample holder. Images have been captured with 100X magnification using the BSE imaging mode and 15.00 kV acceleration voltage of the electron beam.

Three-dimensional objects have been manufactured by the method described above using mixtures A, B, and C as samples for the test methods described above.

For comparison experiments, three-dimensional objects are manufactured from 316L without reinforcement material using the same method that is used for manufacturing three-dimensional objects using mixtures A, B, and C.

The shapes of the three-dimensional objects are selected such that they are suitable for the respective test method.

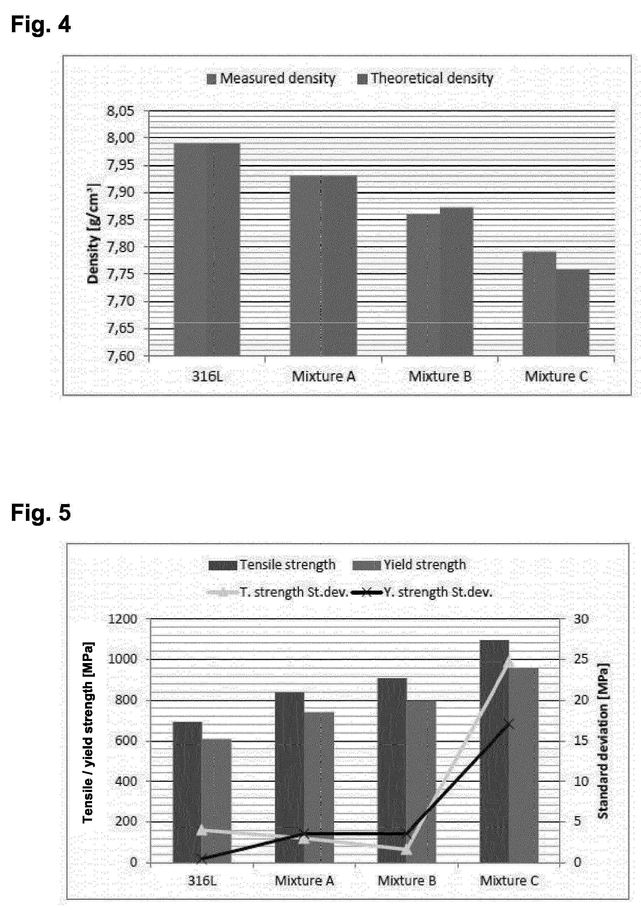

In Fig. 4 the measured density and the calculated theoretical density are shown.

The measured density values are very similar to the calculated density values for all of the mixtures A, B, and C.

In Fig. 5 the measured tensile and yield strength and their standard deviations are shown.

The increase of the measured tensile strength values has an almost linear correlation with the concentration of reinforcement material. This means that the selective laser sintering or selective laser melting of a powder mixture of 316L and silicon carbide leads to an effective material strengthening of the manufactured three-dimensional object compared to a three-dimensional object manufactured by selective laser sintering or selective laser melting of 316L powder without reinforcement material. Comparably advantageous results have not been obtained using conventional sintering methods. This can be attributed to the rapid heat cycles characteristics of the selective laser sintering or selective melting process and the small amount of retained porosity.

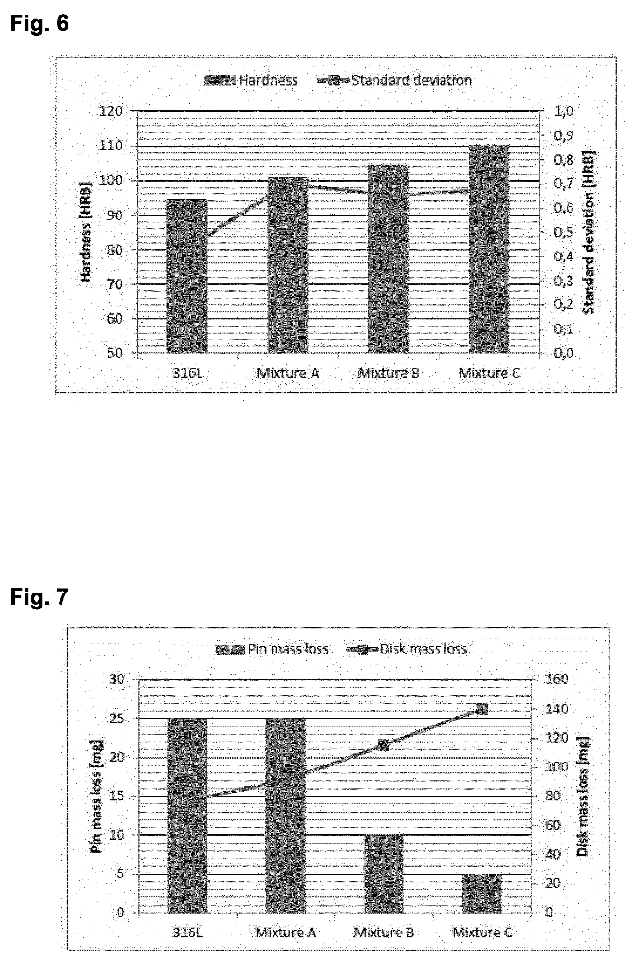

In Fig. 6 the measured hardness together with its standard deviation are shown.

The increase of the measured hardness values has an almost linear correlation with the concentration of reinforcement material. This means that the selective laser sintering or selective laser melting of a powder mixture of 316L and silicon carbide leads to a material hardening of the manufactured three-dimensional object compared to a three-dimensional object manufactured by selective laser sintering or selective laser melting of 316L powder without reinforcement material.

In Fig. 7 the pin mass loss and the disk mass loss measured by wear testing are shown.

A significantly reduced pin mass in the case of mixtures B and C shows that the selective laser sintering or selective laser melting of a powder mixture of 316L and silicon carbide leads to an increase of the wear resistance of the manufactured three-dimensional object compared to a three-dimensional object manufactured by selective laser sintering or selective laser melting of 316L powder without reinforcement material.

The increase of the measured disk mass loss values has an almost linear correlation with the concentration of reinforcement material. This means that the selective laser sintering or selective laser melting of a powder mixture of 316L and silicon carbide leads to an increase of the abrasivity of the manufactured three-dimensional object compared to a three-dimensional object manufactured by selective laser sintering or selective laser melting of 316L powder without reinforcement material.

The measured values for the rate of uniform corrosion penetration corrosion are 0.0035 mm/yr or lower for the three-dimensional objects manufactured as samples by selective laser sintering or selective laser melting of mixture A, mixture B, mixture C, and 316L. They do not show a correlation with the concentration of reinforcement material. This means that it is possible that the corrosion resistance of three-dimensional objects manufactured by selective laser sintering or selective laser melting of a powder mixture of 316L and,silicon carbide is not or not significantly reduced compared to a three-dimensional object manufactured by selective laser sintering or selective laser melting of 316L powder without reinforcement material.

While the present invention has been described by means of selective laser sintering or selective laser melting, respectively, the present invention is not limited to selective laser sintering or selective laser melting. The present invention may be applied to any possible methods for producing a three-dimensional object by applying in layers and selectively solidifying a building material in powder form by means of electromagnetic and/or particle radiation. The irradiation device may contain one or more lasers. The lasers may be gas lasers, solid-state lasers or lasers of any other kind, e.g. laser diodes, especially arrays having VCSEL (Vertical Cavity Surface Emitting Laser) or VECSEL (Vertical External Cavity Surface Emitting Laser), or any combination thereof. In general, any irradiation device by means of which energy may be selectively applied onto a layer of the building material and suitable for solidifying the building material may be used. This may be a light source different from a laser, an electron beam, or any other suitable energy source or radiation source. The invention may also be applied to selective mask sintering, in which a mask and an expanded light source are used instead of a deflected laser beam, or to absorption sintering or inhibition sintering.

## Claims

**1.** Powder mixture for use in the manufacture of a three-dimensional object by means of an additive manufacturing method,
wherein the powder mixture comprises a first material and a second material,
wherein the first material comprises a steel in powder form,
wherein the second material comprises a reinforcement material different from the first material, and
wherein the powder mixture is adapted to form a composite object when solidified by means of an electromagnetic and/or a particle radiation in the additive manufacturing method.

2. Powder mixture according to claim 1,
wherein the steel contains Fe and
max 0.10 wt% C,
2.00 - 3.00 wt% Mo,
10.00 - 15.00 wt% Ni, and
16.00 - 19.00 wt% Cr,
wherein preferably the steel further contains
max 0.030 wt% S,
max 0.045 wt% P,
max 0.16 wt% N,
max 0.50 wt% Cu,
max 1.00 wt% Si, and
max 2.00 wt% Mn.

3. Powder mixture according to any one of the preceding claims,
wherein the median grain size of the first material is 1 μm or more, preferably 10 μm or more, and/or 150 μm or less, preferably 75 μm or less.

4. Powder mixture according to any one of the preceding claims,
wherein the particles of the first material are substantially spherical.

5. Powder mixture according to any one of the preceding claims,
wherein the reinforcement material comprises at least one non-metallic material,
wherein preferably the non-metallic material is one out of borides and carbides and nitrides and oxides and silicides and graphite,
wherein more preferably the reinforcement material comprises silicon carbide,
wherein most preferably the reinforcement material is silicon carbide.

6. Powder mixture according to any one of the preceding claims,
wherein the reinforcement material is a powder,
wherein the median grain size of the reinforcement material is 1 μm or more, preferably 10 μm or more, and/or 200 μm or less, preferably 75 μm or less.

7. Powder mixture according to any one of the preceding claims,
wherein the particles of the reinforcement material have a substantially spherical or a substantially angular or a substantially irregular shape.

8. Powder mixture according to any one of the preceding claims,
wherein the content of the reinforcement material is 0.05 wt% or more, preferably 0.1 wt% or more, more preferably 0.3 wt% or more, still more preferably 0.5 wt% or more, and/or
wherein the content of the reinforcement material is 40 wt% or less, preferably 10 wt% or less, more preferably 5 wt% or less, still more preferably 2 wt% or less.

9. Method for the production of a powder mixture according to any one of the preceding claims,
wherein the powder mixture is produced by mixing the first material and the second material in a predetermined mixing ratio, and
wherein preferably the mixing is a dry mixing.

10. Method for the manufacture of a three-dimensional object from a powder mixture according to any of claims 1 to 8 by selective layer-wise solidification of the powder mixture by means of an electromagnetic radiation and/or a particle radiation at positions that correspond to a cross-section of the object in a respective layer.

**11.** Three-dimensional object manufactured from a powder mixture according to any of claims 1 to 8 by selective layer-wise solidification of the powder mixture by means of an electromagnetic radiation and/or particle radiation at positions that correspond to a cross-section of the object in a respective layer.

**12.** Three-dimensional object according to claim 11,
wherein the material of the three-dimensional object has a tensile strength of 500 MPa or more, preferably 800 MPa or more, more preferably 900 MPa or more, and/or
wherein the material of the three-dimensional object has a yield strength of 170 MPa or more, preferably 400 MPa or more, more preferably 600 MPa or more.

**13.** Three-dimensional object according to claim 11 or claim 12,
wherein a reduction of a pin mass loss in wear testing of the three-dimensional object compared to a pin mass loss in wear testing of a three-dimensional object manufactured from the first material by selective layer-wise solidification of the first material by means of the electromagnetic and/or particle radiation at positions that correspond to a cross-section of the object in a respective layer is 25% or more, preferably 50% or more, more preferably 75% or more, and/or
wherein an increase of a disk mass loss in wear testing of the three-dimensional object compared to a disk mass loss in wear testing of a three-dimensional object manufactured from the first material by selective layer-wise solidification of the first material by means of the electromagnetic and/or particle radiation at positions that correspond to a cross-section of the object in a respective layer is 15% or more, preferably 50% or more, more preferably 70% or more.

**14.** Control unit for an apparatus for manufacturing a three-dimensional object layer by layer by applying and selectively solidifying a powder mixture according to any of claims 1 to 8 by means of an electromagnetic and/or particle radiation,
wherein the control unit is adapted to control that a pre-defined amount of energy is introduced into a defined volume of the powder mixture by means of the electromagnetic and/or particle radiation, and
wherein preferably an upper limit of the predefined amount of energy is selected such that the reinforcement material is not completely dissolved during the time in which the predefined amount of energy is applied to the defined volume of the powder mixture,
wherein the upper limit of the predefined amount of energy is preferably defined such that the reinforcement material of the powder mixture is dissolved to 70 wt% or less, preferably 50 wt% or less, more preferably 30 wt% or less during the time in which the predefined amount of energy is applied to the defined volume of the powder mixture.

**15.** Method for the manufacture of a three-dimensional object from a powder mixture by selective layer-wise solidification of the powder mixture by means of an electromagnetic and/or a particle radiation at positions that correspond to a cross-section of the object in a respective layer,
wherein the powder mixture comprises a first material and a second material,
wherein the first material comprises a metal in powder form,
wherein the second material comprises a reinforcement material,
wherein the powder mixture is selectively solidified by means of an electromagnetic and/or a particle radiation at positions that correspond to a cross-section of the object in a respective layer forming a composite material, and
wherein 90 wt% or less, preferably 70% or less, more preferably 50% or less, still more preferably 30% or less of the reinforcement material are dissolved in the metal.

**Fig. 1**

**Fig. 2**

**Fig. 3**

## Fig. 4

## Fig. 5

**Fig. 6**

**Fig. 7**

Europäisches
Patentamt

European
Patent Office

Office européen
des brevets

# EUROPEAN SEARCH REPORT

Application Number

EP 16 17 3426

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2015/001241 A2 (SNECMA [FR]; EADS EUROP AERONAUTIC DEFENCE [FR]; AIRBUS HELICOPTERS [F) 8 January 2015 (2015-01-08) * claims 1, 9, 12, 23, 24 * * page 9, line 33 - page 10, line 2 * * page 21, lines 22-34 * * page 28, line 33 - page 29, line 4 * ----- | 1-15 | INV. B22F1/00 B22F3/105 C22C33/02 |
| X | EP 2 700 459 A1 (ALSTOM TECHNOLOGY LTD [CH]) 26 February 2014 (2014-02-26) * column 3, paragraph [0024]-[0025] * ----- | 1-15 | |
| X | US 2005/067064 A1 (BABU SUDARSANAM S [US] ET AL) 31 March 2005 (2005-03-31) * page 1, paragraphs [0004], [0017] * ----- | 1-9 | |
| A | | 10-15 | |
| A | WO 01/45882 A2 (TRITON SYSTEMS INC [US]; KUNZE JOSEPH M [US]; GIGERENZER HORST [US]; H) 28 June 2001 (2001-06-28) * the whole document * ----- | 1-15 | |
| | | | TECHNICAL FIELDS SEARCHED (IPC) |
| | | | B22F C22C |

The present search report has been drawn up for all claims

| Place of search | Date of completion of the search | Examiner |
|---|---|---|
| The Hague | 22 November 2016 | Helgadóttir, Inga |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 16 17 3426

This annex lists the patent family members relating to the patent documents cited in the above-mentioned European search report.
The members are as contained in the European Patent Office EDP file on
The European Patent Office is in no way liable for these particulars which are merely given for the purpose of information.

22-11-2016

| Patent document cited in search report | | Publication date | Patent family member(s) | | Publication date |
|---|---|---|---|---|---|
| WO 2015001241 | A2 | 08-01-2015 | CA | 2917038 A1 | 08-01-2015 |
| | | | CN | 105764634 A | 13-07-2016 |
| | | | EP | 3016764 A2 | 11-05-2016 |
| | | | FR | 3008014 A1 | 09-01-2015 |
| | | | JP | 2016532773 A | 20-10-2016 |
| | | | US | 2016175929 A1 | 23-06-2016 |
| | | | WO | 2015001241 A2 | 08-01-2015 |
| EP 2700459 | A1 | 26-02-2014 | CA | 2824042 A1 | 21-02-2014 |
| | | | CN | 103624257 A | 12-03-2014 |
| | | | EP | 2700459 A1 | 26-02-2014 |
| | | | JP | 5901585 B2 | 13-04-2016 |
| | | | JP | 2014040663 A | 06-03-2014 |
| | | | KR | 20140025282 A | 04-03-2014 |
| | | | RU | 2013138729 A | 27-02-2015 |
| | | | US | 2014053956 A1 | 27-02-2014 |
| US 2005067064 | A1 | 31-03-2005 | NONE | | |
| WO 0145882 | A2 | 28-06-2001 | CA | 2391933 A1 | 28-06-2001 |
| | | | EP | 1248691 A2 | 16-10-2002 |
| | | | JP | 2003518193 A | 03-06-2003 |
| | | | US | 2002004105 A1 | 10-01-2002 |
| | | | US | 2003010409 A1 | 16-01-2003 |
| | | | WO | 0145882 A2 | 28-06-2001 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1762122 A1

**Non-patent literature cited in the description**

- **DONGDONG GU et al.** *Applied Surface Science,* 2008, vol. 225, 1880-1887